# EUROPÄISCHE PATENTSCHRIFT

(11) **EP 2 558 284 B1**
(45) Veröffentlichungstag und Bekanntmachung des Hinweises auf die Patenterteilung: **01.01.2014**
(21) Anmeldenummer: 11710460.4
(22) Anmeldetag: 18.03.2011
(51) Int. Cl.: B32B 1/08, B32B 27/28, B32B 27/32, B32B 27/34, F16L 11/04

(54) **FLEXIBLES ROHR MIT MEHRSCHICHTIGEM AUFBAU**
FLEXIBLE, MULTILAYERED HOSE
TUBE FLEXIBLE MULTICOUCHE

(30) Priorität: 13.04.2010 DE 102010003909
(43) Veröffentlichungstag der Anmeldung: 20.02.2013
(73) Patentinhaber: Evonik Degussa GmbH, 45128 Essen (DE)
(72) Erfinder: KUHMANN, Karl, 48249 Dülmen (DE); DOWE, Andreas, 46325 Borken (DE); GÖRING, Rainer, 46325 Borken (DE)
(86) Internationale Anmeldenummer: PCT/EP2011/054142
(87) Internationale Veröffentlichungsnummer: WO 2011/128175

(56) Entgegenhaltungen:
- EP-A1- 1 217 279
- WO-A1-2005/028198

## Beschreibung

Gegenstand der vorliegenden Erfindung ist ein flexibles Rohr mehrschichtigen Aufbaus mit unverbundenen Schichten. Es wird im Folgenden der Einfachheit halber und dem englischen Sprachgebrauch entsprechend als Unbonded Flexible Pipe bezeichnet. Ein derartiges Rohr setzt der Diffusion von Gasen aus einem beförderten Fluid einen hohen Widerstand entgegen und kann daher mit besonderem Vorteil zur Beförderung von Rohöl, Erdgas, Methanol, CO₂ und dergleichen eingesetzt werden.

Unbonded Flexible Pipes sind als solche Stand der Technik. Derartige Rohre enthalten eine innere Auskleidung, üblicherweise in Form eines Kunststoffrohres, als Barriere gegen den Austritt des beförderten Fluids, sowie eine oder mehrere Armierungsschichten auf der Außenseite dieser inneren Auskleidung. Das Unbonded Flexible Pipe kann zusätzliche Schichten enthalten, beispielsweise eine oder mehrere Armierungsschichten auf der Innenseite der inneren Auskleidung, um das Zusammenfallen der inneren Auskleidung bei hohem Außendruck zu verhindern. Eine derartige innere Armierung wird üblicherweise als Karkasse bezeichnet. Darüber hinaus kann eine äußere Umhüllung enthalten sein, um eine Barriere gegen das Eindringen von Flüssigkeit aus der äußeren Umgebung in die Armierungsschichten oder weitere innen liegende polymere oder metallische Funktionsschichten vorzusehen.

Typische Unbonded Flexible Pipes sind beispielsweise in der WO 01/61232, der US 6 123 114 und der US 6 085 799 beschrieben; sie sind darüber hinaus in API Recommended Practice 17B, "Recommended Practice for Flexible Pipe", 3. Auflage, März 2002 sowie in API Specification 17J, "Specification for Unbonded Flexible Pipe", 2. Auflage, November 1999 näher charakterisiert.

Der Ausdruck "unbonded" bedeutet in diesem Zusammenhang, dass mindestens zwei der Schichten, einschließlich Armierungsschichten und Kunststoffschichten, nicht konstruktiv miteinander verbunden sind. In der Praxis enthält das Rohr mindestens zwei Armierungsschichten, die über die Rohrlänge hinweg weder direkt noch indirekt, d. h. über weitere Schichten, miteinander verbunden sind. Dadurch wird das Rohr biegsam und ausreichend flexibel, um es für Transportzwecke aufzurollen.

Derartige Unbonded Flexible Pipes werden in verschiedenen Ausführungen in Offshore-Anwendungen sowie in verschiedenen Onshore-Anwendungen für den Transport von Flüssigkeiten, Gasen und Aufschlämmungen eingesetzt. Sie können beispielsweise für den Transport von Fluiden dort eingesetzt werden, wo über die Länge des Rohres hinweg ein sehr hoher oder ein sehr unterschiedlicher Wasserdruck existiert, etwa in Form von Steigleitungen, die vom Meeresboden hoch zu einer Einrichtung an oder nahe der Meeresoberfläche verlaufen, ferner generell als Rohre für den Transport von Flüssigkeiten oder Gasen zwischen verschiedenen Einrichtungen, als Rohre, die in großer Tiefe auf dem Meeresboden verlegt sind, oder als Rohre zwischen Einrichtungen nahe der Meeresoberfläche.

In herkömmlichen flexiblen Rohren bestehen die Armierungsschicht oder die Armierungsschichten meistens aus spiralförmig angeordneten Stahldrähten, Stahlprofilen oder Stahlbänden, wobei die einzelnen Schichten mit verschiedenen Windungswinkeln relativ zur Rohrachse ausgebildet sein können. Es gibt daneben auch Ausführungsformen, bei denen mindestens eine Armierungsschicht bzw. alle Armierungsschichten aus Fasern bestehen, beispielsweise aus Glasfasern, etwa in Form von Faserbündeln oder Fasergeweben, die in der Regel in eine polymere Matrix eingebettet sind.

Die innere Auskleidung besteht im Stand der Technik üblicherweise aus einem Polyolefin wie Polyethylen, das auch vernetzt sein kann, aus einem Polyamid wie PA11 oder PA12 oder aus Polyvinylidenfluorid (PVDF).

Polyethylen hat den Nachteil, im Kontakt mit Rohöl oder Erdgas stark zu quellen und dann zu kriechen. Zudem permeiert das beförderte unpolare Medium stark durch die Polyethylenwandung nach außen. Aus diesem Grunde wird Polyethylen in der Regel nicht für Leitungen mit direktem Kontakt zu Produktströmen eingesetzt, sondern überwiegend für sogenannte Wasserinjektionsleitungen.

Polyamide wie PA11 oder PA12 sind wegen ihrer sehr guten mechanischen Eigenschaften, der exzellenten Beständigkeit gegenüber Kohlenwasserstoffen und der nur geringen Quellung als Material für die innere Auskleidung sehr gut geeignet. Die besondere Eignung von Polyamiden wurde in der Veröffentlichung OTC 5231 "Improved Thermoplastic Materials for Offshore Flexible Pipes" detailliert beschrieben. Sie können jedoch nur bis maximal ca. 70 °C eingesetzt werden, da bei höheren Temperaturen zunehmende Hydrolyse durch das im Rohöl bzw. Erdgas enthaltene Prozesswasser eintritt. Durch diese Hydrolyse wird das Molekulargewicht des Polyamids so stark verringert, dass sich die mechanischen Eigenschaften erheblich verschlechtern und das Rohr schließlich versagt. Ein detailliertes Prüfprozedere zur Bestimmung der Hydrolyseeigenschaften wird in der API 17TR2 für PA11 beschrieben und kann für PA12 gleichermaßen angewandt werden.

PVDF wird bis maximal 130 °C eingesetzt. Bei Temperaturen oberhalb 130 °C ist bei einem Abfall des Innendrucks jedoch mit Blistering und Microfoaming zu rechnen. PVDF quillt insbesondere in überkritischem CO₂ stark bis etwa 25 %; das beim Druckabfall auftretende Blistering resultiert aus der guten Permeationssperre, die gleichbedeutend mit schlechter Diffusion ist. Dabei tritt innerhalb der Schicht lokale Gasdesorption auf, wobei die Kohäsionsfestigkeit des Materials übertroffen wird.

Insgesamt hat sich bei nicht zu hohen Temperaturen Polyamid, insbesondere PA11 und PA12, als Material für die innere Auskleidung durchgesetzt; eine geeignete Zusammensetzung wird beispielsweise in US 2003/220449 A1 beschrieben. Jedoch ist hier die Hydrolyseneigung des Polyamids und die daraus resultierende geringe Standzeit bei höheren Betriebstemperaturen nachteilig. Es wäre wünschenswert, eine innere Auskleidung beispielsweise in Form eines Rohres zur Verfügung zu haben, die die vorteilhaften Eigenschaften des Polyamids besitzt, bei der jedoch die Hydrolyse des Polyamids stark verringert ist, so dass die Standzeit des Unbonded Flexible Pipe deutlich verlängert wird.

In US 6,455,118 wird ein Unbonded Flexible Pipe beschrieben mit einer zweischichtigen inneren Auskleidung, wobei die innere Schicht, die direkt mit dem Fluid in Kontakt steht, ein Polyolefin oder ein Fluorpolymer sein kann, während die äußere Schicht ein PA11 oder ein PA12 sein kann. Eine derartige Schichtenanordnung löst das Hydrolyseproblem jedoch nicht zufriedenstellend: eine innere Fluorpolymerschicht ist keine ausreichend gute Wassersperre; insbesondere bei erhöhten Betriebstemperaturen findet noch eine beträchtliche Hydrolyse des Polyamids statt. Eine innere Polyolefinschicht könnte zwar möglicherweise geeignet sein, das Problem der Hydrolyse zu lösen, das Polyolefin quillt jedoch im Kontakt mit unpolaren Medien wie Rohöl derart stark, dass bei höheren Temperaturen die Integrität dieser Schicht nicht mehr gewährleistet ist.

EP 1 217 279 A1 offenbart ein flexibles Rohr, das eine innere Auskleidung aus einer inneren Schicht aus einem Fluoropolymer, eine Zwischenschicht aus einem fluorinierten Kleber und eine äußere Schicht aus Polyamid aufweist.

Überraschenderweise konnte das Problem des hydrolytischen Polyamidabbaus dadurch gelöst werden, dass die innere Auskleidung mindestens dreischichtig ausgerührt wird, wobei die Schichtenanordnung Polyamid/Polyolefin/Fluorpolymer vorliegt.

Gegenstand der Erfindung ist demzufolge ein Unbonded Flexible Pipe, das eine innere Auskleidung besitzt, die folgende Schichtenanordnung enthält:
a) Eine innerste Schicht aus einer Fluorpolymer-Formmasse,
b) eine Zwischenschicht aus einer Formmasse auf Basis eines olefinischen Polymers, das ausgewählt ist aus der Gruppe Polyethylen, isotaktisches Polypropylen, syndiotaktisches Polypropylen und syndiotaktisches Polystyrol,
c) eine äußere Schicht aus einer Polyamid-Formmasse.

In einer möglichen Ausführungsform folgen die Schichten a), b) und c) unmittelbar aufeinander. In diesem Fall kann das olefinische Polymer mit polaren Gruppen, beispielsweise Säureanhydridgruppen, funktionalisiert sein, um eine Haftung zu den Nachbarschichten zu erzielen. In anderen möglichen Ausführungsformen befindet sich zwischen den Schichten gemäß a) und b) und/oder zwischen den Schichten gemäß b) und c) eine Haftvermittlerschicht. Geeignete Haftvermittler sind dem Fachmann bekannt; beispielsweise sind mit Maleinsäureanhydrid gepfropfte Polyolefine, Ethylen-Methylmethacrylat-Maleinsäureanhydrid-Terpolymere oder Polyethylenimin enthaltende Pfropfcopolymere als Haftvermittler geeignet. Eine gewisse Anfangshaftung erleichtert die Montage des Unbonded Flexible Pipe; für den Betrieb ist eine Schichtenhaftung jedoch nicht unbedingt erforderlich. Sollten sich zwischen unverbundenen Schichten während des Betriebs Gase ansammeln, können diese mittels geeigneter konstruktiver Maßnahmen abgeleitet werden.

In einer möglichen Ausführungsform befindet sich auf der inneren Seite der inneren Auskleidung eine Karkasse. Derartige Karkassen und ihre Ausführung sind Stand der Technik. In einer weiteren möglichen Ausführungsform enthält das Unbonded Flexible Pipe keine Karkasse, vor allem dann, wenn es nicht unter hohen Außendrucken betrieben werden soll.

Das Unbonded Flexible Pipe enthält darüber hinaus auf der Außenseite der inneren Auskleidung eine oder mehrere Armierungsschichten, die üblicherweise aus spiralförmig angeordneten Stahldrähten, Stahlprofilen oder Stahlbändern bestehen. Die Ausführung dieser Armierungsschichten ist Stand der Technik. Vorzugsweise ist mindestens eine dieser Armierungsschichten so aufgebaut, dass sie dem Innendruck standhält, und mindestens eine weitere dieser Armierungsschichten ist so aufgebaut, dass sie Zugkräften standhält. An die Armierungsschicht bzw. Armierungsschichten kann sich eine äußere Umhüllung anschließen, üblicherweise in Form eines Rohres oder Schlauches aus einer thermoplastischen Formmasse oder einem Elastomer.

Das für die Schicht gemäß a) verwendete Fluorpolymer kann beispielsweise ein Polyvinylidenfluorid (PVDF), ein Ethylen-Tetrafluorethylen-Copolymer (ETFE), ein mit Hilfe einer Terkomponente wie beispielsweise Propen, Hexafluorpropen, Vinylfluorid oder Vinylidenfluorid modifiziertes ETFE (beispielsweise EFEP), ein Ethylen-Chlortrifluorethylen-Copolymer (E-CTFE), ein Polychlortrifluorethylen (PCTFE), ein Tetrafluorethylen-Hexafluorpropen-Vinylidenfluorid-Copolymer (THV), ein Tetrafluorethylen-Hexafluorpropen-Copolymer (FEP) oder ein Tetrafluorethylen-Perfluoralkylvinylether-Copolymer (PFA) sein.

Das für die Schicht gemäß b) verwendete olefinische Polymer kann in erster Linie ein Polyethylen, insbesondere ein Polyethylen hoher Dichte (HDPE), oder ein isotaktisches oder syndiotaktisches Polypropylen sein. Das Polyethylen ist vorzugsweise vernetzt, üblicherweise entweder über Umsetzung mit Radikalinitiatoren oder über feuchtigkeitsinitiierte Vernetzung von aufgepfropften Silylgruppen. Das Polypropylen kann ein Homo- oder ein Copolymer sein, beispielsweise mit Ethylen oder 1-Buten als Comonomer, wobei Random- als auch Blockcopolymere eingesetzt werden können. Darüber hinaus kann das Polypropylen auch schlagzähmodifiziert sein, beispielsweise dem Stand der Technik entsprechend mittels Ethylen-Propylen-Kautschuk (EPM) oder EPDM. Das ebenfalls erfindungsgemäß verwendbare syndiotaktische Polystyrol kann auf bekannte Weise durch metallocenkatalysierte Polymerisation von Styrol hergestellt werden.

Die Formmassen der Schichten gemäß a) und b) können die üblichen Hilfs- und Zusatzstoffe enthalten. Der Anteil an Fluorpolymer bzw. olefinischem Polymer beträgt mindestens 50 Gew.-%, bevorzugt mindestens 60 Gew.-%, besonders bevorzugt mindestens 70 Gew.-%, insbesondere bevorzugt mindestens 80 Gew.-% und ganz besonders bevorzugt mindestens 90 Gew.-%.

Das Polyamid ist herstellbar aus einer Kombination von Diamin und Dicarbonsäure, aus einer ω-Aminocarbonsäure oder dem entsprechenden Lactam. Grundsätzlich kann jedes Polyamid verwendet werden, beispielsweise PA6, PA66 oder Copolyamide auf dieser Basis mit Einheiten, die sich von Terephthalsäure und/oder Isophthalsäure herleiten (im Allgemeinen als PPA bezeichnet) sowie PA9T und PA10T und deren Blends mit anderen Polyamiden. In einer bevorzugten Ausführungsform enthalten die Monomereinheiten des Polyamids im Mittel mindestens 8, mindestens 9 bzw. mindestens 10 C-Atome. Bei Gemischen von Lactamen wird hier das arithmetische Mittel betrachtet. Bei einer Kombination von Diamin und Dicarbonsäure muss das arithmetische Mittel der C-Atome von Diamin und Dicarbonsäure in dieser bevorzugten Ausführungsform mindestens 8, mindestens 9 bzw. mindestens 10 betragen. Geeignete Polyamide sind beispielsweise: PA610 (herstellbar aus Hexamethylendiamin [6 C-Atome] und Sebacinsäure [10 C-Atome], das Mittel der C-Atome in den Monomereinheiten beträgt hier somit 8), PA88 (herstellbar aus Octamethylendiamin und 1.8-Octandisäure), PA8 (herstellbar aus Capryllactam), PA612, PA810, PA108, PA9, PA613, PA614, PA812, PA128, PA1010, PA10, PA814, PA148, PA1012, PA11, PA1014, PA1212 und PA12. Die Herstellung der Polyamide ist Stand der Technik. Selbstverständlich können auch hierauf basierende Copolyamide eingesetzt werden, wobei gegebenenfalls auch Monomere wie Caprolactam mit verwendet werden können.

Das Polyamid kann auch ein Polyetheramid sein. Polyetheramide sind prinzipiell z. B. aus der DE-OS 30 06 961 bekannt. Sie enthalten als Comonomer ein Polyetherdiamin. Geeignete Polyetherdiamine sind durch Konversion der entsprechenden Polyetherdiole durch reduktive Aminierung oder Kupplung an Acrylnitril mit nachfolgender Hydrierung zugänglich (z. B. EP-A-0 434 244; EP-A-0 296 852). Sie besitzen in der Regel eine zahlenmittlere Molmasse von 230 bis 4000; ihr Anteil am Polyetheramid beträgt bevorzugt 5 bis 50 Gew.-%.

Kommerziell verfügbare Polyetherdiamine ausgehend von Propylenglykol sind als JEFFAMIN® D-Typen bei der Fa. Huntsman kommerziell erhältlich. Grundsätzlich sind auch Polyetherdiamine ausgehend vom 1.4-Butandiol oder 1.3-Butandiol, oder gemischt aufgebaute Polyetherdiamine, etwa mit statistischer oder mit blockweiser Verteilung der von den Diolen herrührenden Einheiten, gut geeignet.

Ebenso können auch Mischungen verschiedener Polyamide, ausreichende Verträglichkeit vorausgesetzt, verwendet werden. Verträgliche Polyamidkombinationen sind dem Fachmann bekannt; beispielsweise seien hier die Kombination PA12/PA1012, PA12/PA1212, PA612/PA12, PA613/PA12, PA1014/PA12 und PA610/PA12 sowie entsprechende Kombinationen mit PA11 aufgeführt. Im Zweifelsfall können verträgliche Kombinationen durch Routineversuche ermittelt werden.

In einer möglichen Ausführungsform wird eine Mischung aus 30 bis 99 Gew.-%, bevorzugt 40 bis 98 Gew.-% und besonders bevorzugt 50 bis 96 Gew.-% Polyamid im engeren Sinne sowie 1 bis 70 Gew.-%, bevorzugt 2 bis 60 Gew.-% und besonders bevorzugt 4 bis 50 Gew.-% Polyetheramid verwendet.

Neben Polyamid kann die Formmasse weitere Komponenten enthalten wie z.B. Schlagzähmodifikatoren, andere Thermoplaste, Weichmacher und andere übliche Zusatzstoffe. Erforderlich ist nur, dass das Polyamid die Matrix der Formmasse bildet.

Geeignete Schlagzähmodifikatoren sind beispielsweise Ethylen/α-Olefin-Copolymere, vorzugsweise ausgewählt aus
a) Ethylen/C₃- bis C₁₂-α-Olefin-Copolymeren mit 20 bis 96, bevorzugt 25 bis 85 Gew.-% Ethylen. Als C₃- bis C₁₂-α-Olefin wird beispielsweise Propen, 1-Buten, 1-Penten, 1-Hexen, 1-Octen, 1-Decen oder 1-Dodecen eingesetzt. Typische Beispiele hierfür sind Ethylen-Propylen-Kautschuk sowie LLDPE und VLDPE.
b) Ethylen/C₃- bis C₁₂-α-Olefin/unkonjugiertes Dien-Terpolymeren mit 20 bis 96, bevorzugt 25 bis 85 Gew.-% Ethylen und bis maximal etwa 10 Gew.-% eines unkonjugierten Diens wie Bicyclo(2.2.1)heptadien, Hexadien-1.4, Dicyclopentadien oder 5-Ethylidennorbornen. Als C₃- bis C₁₂-α-Olefin sind ebenfalls beispielsweise Propen, 1-Buten, 1-Penten, 1-Hexen, 1-Octen, 1-Decen oder 1-Dodecen geeignet.

Die Herstellung dieser Copolymere bzw. Terpolymere, beispielsweise mit Hilfe eines Ziegler-Natta-Katalysators, ist Stand der Technik.

Andere geeignete Schlagzähmodifikatoren sind Styrol-Ethylen/Butylen-Blockcopolymere. Hierbei werden vorzugsweise Styrol-Ethylen/Butylen-Styrol-Blockcopolymere (SEBS) eingesetzt, die durch Hydrierung von StyrolButadien-Styrol-Blockcopolymeren erhältlich sind. Es können aber auch Diblocksysteme (SEB) oder Multiblocksysteme verwendet werden. Derartige Blockcopolymere sind Stand der Technik.

Diese Schlagzähmodifikatoren enthalten vorzugsweise Säureanhydridgruppen, die auf bekannte Weise durch thermische oder radikalische Reaktion des Hauptkettenpolymers mit einem ungesättigten Dicarbonsäureanhydrid, einer ungesättigten Dicarbonsäure oder einem ungesättigten Dicarbonsäuremonoalkylester in einer Konzentration eingebracht werden, die für eine gute Anbindung an das Polyamid ausreicht. Geeignete Reagenzien sind beispielsweise Maleinsäure, Maleinsäureanhydrid, Maleinsäuremonobutylester, Fumarsäure, Citraconsäureanhydrid, Aconitsäure oder Itaconsäureanhydrid. Auf diese Weise sind vorzugsweise 0,1 bis 4 Gew.-% eines ungesättigten Anhydrids an den Schlagzähmodifikator aufgepfropft. Gemäß dem Stand der Technik kann das ungesättigte Dicarbonsäureanhydrid oder dessen Vorstufe auch zusammen mit einem weiteren ungesättigten Monomeren wie beispielsweise Styrol, α-Methylstyrol oder Inden aufgepfropft werden.

Andere geeignete Schlagzähmodifikatoren sind Copolymere, die Einheiten der folgenden Monomere enthalten:
a) 20 bis 94,5 Gew.-% eines oder mehrerer α-Olefine mit 2 bis 12 C-Atomen,
b) 5 bis 79,5 Gew.-% einer oder mehrerer acrylischer Verbindungen, ausgewählt aus
   - Acrylsäure bzw. Methacrylsäure bzw. deren Salzen,
   - Estern von Acrylsäure bzw. Methacrylsäure mit einem C1- bis C12-Alkohol, die gegebenenfalls eine freie Hydroxyl- oder Epoxidfunktion tragen können,
   - Acrylnitril bzw. Methacrylnitril,
   - Acrylamiden bzw. Methacrylamiden,
c) 0,5 bis 50 Gew.-% eines olefinisch ungesättigten Epoxids, Carbonsäureanhydrids, Carbonsäureimids, Oxazolins oder Oxazinons.

Dieses Copolymere ist beispielsweise aus folgenden Monomeren zusammengesetzt, wobei diese Aufzählung nicht erschöpfend ist:
a) α-Olefine wie beispielsweise Ethylen, Propen, 1-Buten, 1-Penten, 1-Hexen, 1-Octen, 1-Decen oder 1-Dodecen;
b) Acrylsäure, Methacrylsäure oder deren Salze, beispielsweise mit Na^{⊕} oder Zn^{2⊕} als Gegenion; Methylacrylat, Ethylacrylat, n-Propylacrylat, n-Butylacrylat, Isobutylacrylat, n-Hexylacrylat, n-Octylacrylat, 2-Ethylhexylacrylat, Isononylacrylat, Dodecylacrylat, Methylmethacrylat, Ethylmethacrylat, n-Propylmethacrylat, n-Butylmethacrylat, Isobutylmethacrylat, 2-Ethylhexylmethacrylat, Hydroxyethylacrylat, 4-Hydroxybutylmethacrylat, Glycidylacrylat, Glycidylmethacrylat, Acrylnitril, Methacrylnitril, Acrylamid, N-Methylacrylamid, N,N-Dimethylacrylamid, N-Ethylacrylamid, N-Hydroxyethylacrylamid, N-Propylacrylamid, N-Butylacrylamid, N-(2-Ethylhexyl)acrylamid, Methacrylamid, N-Methylmethacrylamid, N,N-Dimethylmethacrylamid, N-Ethylmethacrylamid, N-Hydroxyethylmethacrylamid, N-Propylmethacrylamid, N-Butylmethacrylamid, N,N-Dibutylmethacrylamid, N-(2-Ethylhexyl)methacrylamid;
c) Vinyloxiran, Allyloxiran, Glycidylacrylat, Glycidylmethacrylat, Maleinsäureanhydrid, Aconitsäureanhydrid, Itaconsäureanhydrid, ferner die aus diesen Anhydriden durch Reaktion mit Wasser entstehenden Dicarbonsäuren; Maleinimid, N-Methylmaleinimid, N-Ethylmaleinimid, N-Butylmaleinimid, N-Phenylmaleinimid, Aconitsäureimid, N-Methylaconitsäureimid, N-Phenylaconitsäureimid, Itaconsäureimid, N-Methylitaconsäureimid, N-Phenylitaconsäureimid, N-Acryloylcaprolactam, N-Methacryloylcaprolactam, N-Acryloyllaurinlactam, N-Methacryloyllaurinlactam, Vinyloxazolin, Isopropenyloxazolin, Allyloxazolin, Vinyloxazinon oder Isopropenyloxazinon.

Bei einer Verwendung von Glycidylacrylat oder Glycidylmethacrylat fungieren diese gleichzeitig auch als acrylische Verbindung b), so dass bei ausreichender Menge des Glycidyl(meth)acrylats keine weitere acrylische Verbindung enthalten zu sein braucht. In dieser speziellen Ausführungsform enthält das Copolymere Einheiten der folgenden Monomere:
a) 20 bis 94,5 Gew.-% eines oder mehrerer α-Olefine mit 2 bis 12 C-Atomen,
b) 0 bis 79,5 Gew.-% einer oder mehrerer acrylischer Verbindungen, ausgewählt aus
   - Acrylsäure bzw. Methacrylsäure bzw. deren Salzen,
   - Estern von Acrylsäure bzw. Methacrylsäure mit einem C₁- bis C₁₂-Alkohol,
   - Acrylnitril bzw. Methacrylnitril,
   - Acrylamiden bzw. Methacrylamiden
c) 0,5 bis 80 Gew.-% eines Esters von Acrylsäure oder Methacrylsäure, der eine Epoxidgruppe enthält,
wobei die Summe von b) und c) mindestens 5,5 Gew.-% ergibt.

Das Copolymere kann in kleiner Menge weitere einpolymerisierte Monomere enthalten, sofern diese die Eigenschaften nicht nennenswert beeinträchtigen, wie beispielsweise Maleinsäuredimethylester, Fumarsäuredibutylester, Itaconsäurediethylester oder Styrol.

Die Herstellung derartiger Copolymerer ist Stand der Technik. Eine Vielzahl verschiedener Typen hiervon ist als Handelsprodukt erhältlich, beispielsweise unter der Bezeichnung LOTADER® (Arkema; Ethylen/Acrylat/Terkornponente bzw. Ethylen/Glycidylmethacrylat).

In einer bevorzugten Ausführungsform enthält die Polyamidformmasse hierbei folgende Komponenten:
1. 60 bis 96,5 Gew.-Teile Polyamid,
2. 3 bis 39,5 Gew.-Teile einer Schlagzähkomponente, die Säureanhydridgruppen enthält, wobei die Schlagzähkomponente ausgewählt ist aus Ethylen/α-Olefin-Copolymeren und Styrol-Ethylen/Butylen-Blockcopolymeren,
3. 0,5 bis 20 Gew.-Teile eines Copolymeren, das Einheiten der folgenden Monomere enthält:
   a) 20 bis 94,5 Gew.-% eines oder mehrerer α-Olefine mit 2 bis 12 C-Atomen,
   b) 5 bis 79,5 Gew.-% einer oder mehrerer acrylischer Verbindungen, ausgewählt aus
      - Acrylsäure bzw. Methacrylsäure bzw. deren Salzen,
      - Estern von Acrylsäure bzw. Methacrylsäure mit einem C₁- bis C₁₂-Alkohol, die gegebenenfalls eine freie Hydroxyl- oder Epoxidfunktion tragen können,
      - Acrylnitril bzw. Methacrylnitril,
      - Acrylamiden bzw. Methacrylamiden,
   c) 0,5 bis 50 Gew.-% eines olefinisch ungesättigten Epoxids, Carbonsäureanhydrids, Carbonsäureimids, Oxazolins oder Oxazinons,
wobei die Summe der Gewichtsteile der Komponenten gemäß 1., 2. und 3. 100 beträgt.

In einer weiteren bevorzugten Ausführungsform enthält die Formmasse hierbei:
1. 65 bis 90 Gew.-Teile und besonders bevorzugt 70 bis 85 Gew.-Teile Polyamid,
2. 5 bis 30 Gew.-Teile, besonders bevorzugt 6 bis 25 Gew.-Teile und insbesondere bevorzugt 7 bis 20 Gew.-Teile der Schlagzähkomponente,
3. 0,6 bis 15 Gew.-Teile und besonders bevorzugt 0,7 bis 10 Gew.-Teile des Copolymeren, welches bevorzugt Einheiten der folgenden Monomere enthält:
   a) 30 bis 80 Gew.-% α-Olefin(e),
   b) 7 bis 70 Gew.-% und besonders bevorzugt 10 bis 60 Gew.-% der acrylischen Verbindung(en),
   c) 1 bis 40 Gew.-% und besonders bevorzugt 5 bis 30 Gew.-% des olefinisch ungesättigten Epoxids, Carbonsäureanhydrids, Carbonsäureimids, Oxazolins oder Oxazinons.

Als Schlagzähkomponente kann darüber hinaus auch Nitrilkautschuk (NBR) oder hydrierter Nitrilkautschuk (H-NBR), die gegebenenfalls funktionelle Gruppen enthalten, verwendet werden. Entsprechende Formmassen sind in der US2003/0220449A1 beschrieben.

Andere Thermoplaste, die in der Polyamidformmasse enthalten sein können, sind in erster Linie Polyolefine. Sie können in einer Ausführungsform, wie weiter oben bei den Schlagzähmodifikatoren beschrieben,

Säureanhydridgruppen enthalten und dann gegebenenfalls zusammen mit einem unfunktionalisierten Schlagzähmodifikator vorliegen. In einer weiteren Ausführungsform sind sie nicht funktionalisiert und liegen in der Formmasse in Kombination mit einem funktionalisierten Schlagzähmodifikator oder einem funktionalisierten Polyolefin vor. Der Begriff "funktionalisiert" bedeutet, dass die Polymere gemäß dem Stand der Technik mit Gruppen versehen sind, die mit den Polyamid-Endgruppen reagieren können, z. B. Säureanhydridgruppen, Carboxylgruppen, Epoxidgruppen oder Oxazolingruppen. Hierbei sind folgende Zusammensetzungen bevorzugt:
1. 50 bis 95 Gew.-Teile Polyamid,
2. 1 bis 49 Gew.-Teile funktionalisiertes oder unfunktionalisiertes Polyolefin sowie
3. 1 bis 49 Gew.-Teile funktionalisierter oder unfunktionalisierter Schlagzähmodifikator,
wobei die Summe der Gewichtsteile der Komponenten gemäß 1., 2. und 3. 100 beträgt.

Beim Polyolefin handelt es sich beispielsweise um Polyethylen oder um Polypropylen. Grundsätzlich kann jeder handelsübliche Typ eingesetzt werden. So kommen beispielsweise in Frage: Lineares Polyethylen hoher, mittlerer oder niedriger Dichte, LDPE, Ethylen-Acrylester-Copolymere, Ethylen-Vinylacetat-Copolymere, isotaktisches oder ataktisches Homopolypropylen, Random-copolymere von Propen mit Ethen und/oder Buten-1, Ethylen-Propylen-Blockcopolymere und dergleichen mehr. Das Polyolefin kann nach jedem bekannten Verfahren hergestellt werden, beispielsweise nach Ziegler-Natta, nach dem Phillips-Verfahren, mittels Metallocenen oder radikalisch. Das Polyamid kann in diesem Fall auch beispielsweise PA6 und/oder PA66 sein.

In einer möglichen Ausführungsform enthält die Formmasse 1 bis 25 Gew.-% Weichmacher, besonders bevorzugt 2 bis 20 Gew.-% und insbesondere bevorzugt 3 bis 15 Gew.-%.

Weichmacher und ihr Einsatz bei Polyamiden sind bekannt. Eine allgemeine Übersicht über Weichmacher, die für Polyamide geeignet sind, kann Gächter/Müller, Kunststoffadditive, C. Hanser Verlag, 2. Ausgabe, S. 296 entnommen werden.

Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure. Als Weichmacher kommen u. a. p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid infrage.

Darüber hinaus kann die Formmasse noch übliche Mengen von Zusatzstoffen enthalten, die zum Einstellen bestimmter Eigenschaften benötigt werden. Beispiele hierfür sind Pigmente bzw. Füllstoffe wie Ruß, Titandioxid, Zinksulfid, Verstärkungsfasern wie z.B. Glasfasern, Verarbeitungshilfsmittel wie Wachse, Zinkstearat oder Calciumstearat, Antioxidantien, UV-Stabilisatoren sowie Zusätze, die dem Produkt antielektrostatische Eigenschaften verleihen wie z. B. Kohlenstofffasern, Graphitfibrillen, Fasern aus rostfreiem Stahl bzw. Leitfähigkeitsruß.

Der Anteil an Polyamid in der Formmasse gemäß c) beträgt mindestens 50 Gew.-%, bevorzugt mindestens 60 Gew.-%, besonders bevorzugt mindestens 70 Gew.-%, insbesondere bevorzugt mindestens 80 Gew.-% und ganz besonders bevorzugt mindestens 90 Gew.-%.

Der Innendurchmesser der inneren Auskleidung beträgt in der Regel mindestens 30 mm, mindestens 40 mm, mindestens 50 mm bzw. mindestens 60 mm sowie maximal 900 mm, maximal 800 mm, maximal 700 mm bzw. maximal 620 mm; in Einzelfällen kann er aber auch darüber oder darunter liegen. Die Gesamtwanddicke der inneren Auskleidung beträgt in der Regel mindestens 2 mm, mindestens 2,5 mm, mindestens 3 mm, mindestens 4 mm bzw. mindestens 5 mm sowie maximal 50 mm, maximal 40 mm, maximal 30 mm, maximal 25 mm, maximal 20 mm bzw. maximal 16 mm; auch sie kann in Einzelfällen darüber oder darunter liegen. Die Dicke der Schicht gemäß a) aus der Fluorpolymer-Formmasse beträgt 0,5 bis 30 % und bevorzugt 1 bis 20 % der Gesamtwanddicke, die Dicke der Schicht gemäß b) aus der Formmasse auf Basis eines olefinischen Polymers beträgt 1 bis 60 % und bevorzugt 2 bis 50 % der Gesamtwanddicke und die Dicke der Schicht gemäß c) aus der Polyamid-Formmasse beträgt 10 bis 98,5 % und bevorzugt 20 bis 97 % der Gesamtwanddicke.

Die innere Auskleidung wird gemäß dem Stand der Technik durch Coextrusion, durch Wickelextrusion der einzelnen Schichten oder gegebenenfalls durch Wickeln von Tapes hergestellt.

Bei gleichzeitigem Vorliegen der Schichten gemäß a) und b) ist das Polyamid in der Schicht gemäß c) hervorragend vor Diffusion von Wasser aus dem beförderten Fluid geschützt; eine Hydrolyse des Polyamids ist daher erheblich zurückgedrängt. Die Standzeit des Rohres wird daher gerade auch bei Betriebstemperaturen oberhalb von 70 °C erheblich verbessert.

## Patentansprüche

1. Flexibles Rohr mehrschichtigen Aufbaus mit unverbundenen Schichten, das eine innere Auskleidung mit folgender Schichtenanordnung enthält:
a) Eine innerste Schicht aus einer Fluorpolymer-Formmasse,
b) eine Zwischenschicht aus einer Formmasse auf Basis eines olefinischen Polymers, das ausgewählt ist aus der Gruppe Polyethylen, isotaktisches Polypropylen, syndiotaktisches Polypropylen und syndiotaktisches Polystyrol,
c) eine äußere Schicht aus einer Polyamid-Formmasse.

2. Flexibles Rohr gemäß Anspruch 1,
**dadurch gekennzeichnet,**
**dass** die innere Auskleidung ein Rohr ist.

3. Flexibles Rohr gemäß einem der Ansprüche 1 und 2,
**dadurch gekennzeichnet,**
**dass** es neben der inneren Auskleidung eine oder mehrere Schichten enthält, die ausgewählt sind aus
- einer innenliegenden Karkasse,
- einer oder mehrerer außenliegender Armierungsschichten sowie
- einer äußeren Umhüllung.

## Claims

1. Flexible pipe of multilayer structure with unbonded layers, said pipe comprising an inner lining with the following layer arrangement:
a) an innermost layer of a fluoropolymer molding composition,
b) an intermediate layer of a molding composition based on an olefinic polymer selected from the group of polyethylene, isotactic polypropylene, syndiotactic polypropylene and syndiotactic polystyrene,
c) an outer layer of a polyamide molding composition.

2. Flexible pipe according to Claim 1,
**characterized in that**
the inner lining is a pipe.

3. Flexible pipe according to either of Claims 1 and 2, **characterized in that**
it comprises, as well as the inner lining, one or more layers selected from
- an inner carcass,
- one or more outer reinforcing layers and
- an outer shell.

## Revendications

1. Tuyau souple à structure multicouche, présentant des couches non assemblées, qui contient un revêtement interne présentant l'ordre de couches suivant :
a) une couche interne constituée par une masse de moulage en polymère fluoré,
b) une couche intermédiaire constituée par une masse de moulage à base d'un polymère oléfinique, qui est choisi dans le groupe formé par le polyéthylène, le polypropylène isotactique, le polypropylène syndiotactique et le polystyrène syndiotactique,
c) une couche externe en une masse de moulage en polyamide.

2. Tuyau souple selon la revendication 1, **caractérisé en ce que** le revêtement interne est un tuyau.

3. Tuyau souple selon l'une quelconque des revendications 1 et 2, **caractérisé en ce qu'**il contient, outre le revêtement interne, une ou plusieurs couches, qui sont choisies parmi
- une carcasse interne,
- une ou plusieurs couches d'armature externes, ainsi que
- un enrobage externe.
